(19) Europäisches Patentamt
European Patent Office
Office européen des brevets

(11) **EP 4 124 887 A1**

(12) **EUROPEAN PATENT APPLICATION**

(43) Date of publication:
**01.02.2023   Bulletin 2023/05**

(21) Application number: **21188550.4**

(22) Date of filing: **29.07.2021**

(51) International Patent Classification (IPC):
*G01S 13/72* (2006.01)     *G01S 13/931* (2020.01)
*G06V 20/58* (2022.01)

(52) Cooperative Patent Classification (CPC):
**G01S 13/726; G01S 13/931; G06V 20/58**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Aptiv Technologies Limited**
**St. Michael (BB)**

(72) Inventors:
• **SPATA, Dominic**
  **58455 Witten (DE)**
• **GRUMPE, Arne**
  **45276 Essen (DE)**
• **FREEMAN, Ido**
  **40233 Duesseldorf (DE)**

(74) Representative: **Manitz Finsterwald**
**Patent- und Rechtsanwaltspartnerschaft mbB**
**Martin-Greif-Strasse 1**
**80336 München (DE)**

(54) **METHODS AND SYSTEMS FOR PREDICTING TRAJECTORY DATA OF AN OBJECT AND METHODS AND SYSTEMS FOR TRAINING A MACHINE LEARNING METHOD FOR PREDICTING TRAJECTORY DATA OF AN OBJECT**

(57)   A computer implemented method for predicting trajectory data of an object comprises the following steps carried out by computer hardware components: acquiring radar data of the object; determining a parametrization of the trajectory data of the object based on the radar data; wherein the trajectory data of the object comprises a position of the object and a direction of the object, wherein the parametrization comprises a plurality of parameters, and wherein the parametrization comprises a polynomial of a pre-determined degree, wherein the parameters comprise a plurality of coefficients related to elements of a basis of the polynomial space of polynomials of the pre-determined degree; and determining a variance of the trajectory data of the object based on the radar data.

EP 4 124 887 A1

## Description

FIELD

The present disclosure relates to methods and systems for predicting trajectory data of an object and methods and systems for training a machine learning method for predicting trajectory data of an object.

BACKGROUND

Object tracking is an essential feature, for example in at least partially autonomously driving vehicle.

Accordingly, there is a need to provide more reliable and efficient object tracking.

SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for predicting trajectory data of an object, the method comprising the following steps performed (in other words: carried out) by computer hardware components: acquiring radar data of the object; determining a parametrization of the trajectory data of the object based on the radar data; wherein the trajectory data of the object comprises a position of the object and a direction of the object, wherein the parametrization comprises a plurality of parameters, and wherein the parametrization comprises a polynomial of a pre-determined degree, wherein the parameters comprise a plurality of coefficients related to elements of a basis of the polynomial space of polynomials of the pre-determined degree; and determining a variance of the trajectory data of the object based on the radar data. The method may provide (or may be) the evaluation of a machine learning method, for example an artificial neural network.

A trajectory may be understood as a property (for example location or orientation/ direction) over time.

According to an embodiment, determining a variance of the trajectory data of the object comprises: determining a parametrization of the variance of the trajectory data of the object based on the radar data; wherein the parametrization comprises a plurality of further parameters, wherein the parametrization comprises a further polynomial of a pre-determined further degree, wherein the further parameters comprise a plurality of further coefficients related to elements of the basis of the polynomial space of polynomials of the pre-determined further degree.

According to an embodiment, the variance of the trajectory data of the object comprises a multivariate normal distribution over the parameters. For example, the parameters of the polynomials which provide the parametrization of the trajectory data may be the further parameters of the parameterization of the variance, and the further polynomials may have a degree of double the degree of the parameterization of the trajectory data.

According to an embodiment, determining the variance of the trajectory data comprises determining a positive definite matrix. The positive definite matrix may be understood as a matrix of an LDL decomposition. It will be understood that it may not be necessary to actually carry out an LDL decomposition; technically, the reverse may be done: the LDL formula may be used to construct positive definite matrices from outputs obtainable using neural network layers. The LDL ("lower-diagonal-lower") decomposition may represent a covariance matrix as a product of a lower-unitriangular matrix, a diagonal matrix with strictly positive diagonal entries (which may correspond to the positive definite matrix), and the transpose of the lower-unitriangular matrix. The covariance matrix may be generated using two layers of an artificial neural networks.

According to an embodiment, the method further comprises the following steps carried out by the computer hardware components: determining first intermediate data based on the radar data based on a residual backbone using a recurrent component; determining second intermediate data based on the first intermediate data using a feature pyramid, wherein the feature pyramid preferably comprises transposed strided convolutions (which may increase the richness of features); and wherein the parametrization of the trajectory data of the object is determined based on the second intermediate data.

Thus, the method may provide a multi-object tracking approach for radar data that combines approaches into a recurrent convolutional one-stage feature pyramid network and performs detection and motion forecasting jointly on radar data, for example radar point cloud data or radar cube data, to solve the tracking task.

Radar cube data may also be referred to as radar data cubes.

According to an embodiment, the residual backbone using the recurrent component comprises a residual backbone preceded by a recurrent layer stack; and/or the residual backbone using the recurrent component comprises a recurrent residual backbone comprising a plurality of recurrent layers. It has been found that providing a plurality of recurrent layers in the backbone improves performance by allowing the network to fuse temporal information on multiple scales.

According to an embodiment, the plurality of recurrent layers comprise a convolutional long short-term memory followed by a convolution followed by a normalization: and/or wherein the plurality of recurrent layers comprise a convolution followed by a normalization followed by a rectified linear unit followed by a convolutional long short-term memory followed by a convolution followed by a normalisation.

According to an embodiment, the recurrent component comprises a recurrent loop which is carried out once per time frame; and/ or the recurrent component keeps hidden states between time frames. This may provide that the method (or the network used in the method) can learn to use information from arbitrarily distant points in time and that past sensor readings do not need to be buffered and stacked to operate the method or network.

According to an embodiment, the radar data of the object comprises at least one of radar data cubes or radar point data.

According to an embodiment, the coefficients represent a respective mean value. According to an embodiment, the further components represent a standard deviation.

According to an embodiment, the computer implemented method further comprises the following step carried out by the computer hardware components: postprocessing of the trajectory data based on the variance of the trajectory data. It has been found that making use of the variance when carrying our further processing on the trajectory data may improve the results of the further processing.

According to an embodiment, the postprocessing comprises at least one of association, aggregation, or scoring. Association may for example refer to association of new detections to existing tracks. Aggregation may for example refer to combining information from multiple detections concerning the same time-step. Scoring may for example refer to determination whether a detection is a false positive.

According to an embodiment, the method is trained using a training method comprising a first training and a second training, wherein in the first training, parameters for the trajectory data are determined, and wherein in the second training, parameters for the trajectory data and parameters for the variance of the trajectory data are determined.

In another aspect, the present disclosure is directed at a computer implemented method for training a machine learning method for predicting trajectory data of an object, the method comprising the following steps carried out by computer hardware components: a first training, wherein parameters for the trajectory data are determined; and a second training, wherein parameters for the trajectory data and parameters for the variance of the trajectory data are determined.

It has been found that splitting the training into two phases (the first training and the second training) improves training results and decreases training time and/or the amount of training data required. The results of the first training may be reused in the second training (for example as starting values for the optimization in the second training).

According to an embodiment, in the first step, a smooth L1 function is used as a loss function. Not taking into account the variance-related components during the first training may avoid the regression objectives overpowering the classification objective.

According to an embodiment, in the second step, a bivariate normal log-likelihood function is used as a loss function.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle comprising a least a subset of the computer system as described herein.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

The methods and systems described herein may provide a multi-object tracking approach for radar data that improves tracking by formulating time-continuous polynomial functions.

DRAWINGS

Exemplary embodiments and functions of the present disclosure are described herein in conjunction with the following drawings, showing schematically:

Fig. 1     an illustration of a setup for the first training phase according to various embodiments;

Fig. 2    an illustration of a setup for the second training phase according to various embodiments;

Fig. 3    a flow diagram illustrating a method for predicting trajectory data of an object according to various embodiments;

Fig. 4    a flow diagram illustrating a method for training a machine learning method for predicting trajectory data of an object according to various embodiments;

Fig. 5    a computer system with a plurality of computer hardware components configured to carry out steps of a computer implemented method for predicting trajectory data of an object according to various embodiments or steps of a computer implemented method for predicting trajectory data of an object according to various embodiments according to various embodiments.

DETAILED DESCRIPTION

Various embodiments may provide variance estimation for DeepTracker.

DeepTracker (which may be the short form of Deep Multi-Object Tracker for RADAR, as described in European patent application 20187694.3, which is incorporated herein in its entirety) may improve upon classical methods through the use of a deep neural network that performs object detection and short-term motion forecasting simultaneously. The motion forecasts may be used to perform cross-frame association and aggregation of object information in a simple postprocessing step, allowing for efficient object tracking and temporal smoothing.

European patent application 21186073.9, which is incorporated herein in its entirety, provides a reformulation for DeepTracker, wherein its motion forecasting is reformulated using polynomial functions. This may allow for time-continuous object trajectories, both closing part of the remaining feature gap to classical methods that use explicit motion models and introducing additional regularization to the model.

DeepTracker may model the mean of the underlying distribution of possible trajectories given the input data. According to various embodiments, a notion of uncertainty around that mean may be provided.

Methods like Kalman filtering may maintain an estimate of the covariance matrix of the tracked objects' states, allowing the tracking method itself as well as any downstream tasks to make more informed decisions based on the system's overall confidence in its outputs. This may be a feature important for DeepTracker's tracking approach since it performs short-term motion forecasting, which possesses an inherent level of uncertainty. No sensor can realistically provide all necessary information to predict the future with perfect accuracy in all situations and certain important factors (like, for example, driver intention) can therefore principally not be explained by the model in terms of its input.

According to various embodiments, DeepTracker may be improved such that it estimates the heteroscedastic aleatoric uncertainty of its regression outputs. Heteroscedastic aleatoric uncertainty may refer to data-dependent uncertainty which is irreducible even when given more samples.

For each object, DeepTracker may estimate four pieces of information (the position of the object, the size of the object, the speed of the object, and the orientation of the object in 2D space). Of those, position and orientation may be expressed in terms of time-continuous polynomial functions allowing prediction into arbitrary points in time, wherein speed may be obtained as the derivative of the position polynomial, and size may be considered time-constant. All four of these pieces of information may be represented as 2D (two-dimensional) cartesian vectors (in case of orientation for example by encoding it as a direction vector). According to various embodiments, uncertainty may be modeled by replacing each 2D cartesian vector instead with the parameters of a bivariate normal distribution, consisting of the distribution's 2D mean vector $\mu$ and a $2 \times 2$ covariance matrix $\Sigma$.

According to various embodiments, two possibilities may be considered for parametrizing the covariance matrix (an isotropic variance ($\Sigma = \sigma I$) with a single variance parameter for one 2D vector, and a full covariance matrix which can model different levels of variance for both components of the vector as well as the correlation between them).

The diagonal case ($\Sigma = \text{diag}(\sigma_x, \sigma_y)$) may assume the components of the vector to be uncorrelated. However, the network output must undergo compensation for motion of the ego-vehicle, which involves rotation of the coordinate system, and may therefore introduce correlation between the components, anyway, whenever the diagonal matrix is non-isotropic ($\sigma_x \neq \sigma_y$). Index x may for example be used to denote the first component (or first variable or first parameter) and index y may be used to denote the second component (or second variable or second parameter) of the vector representing the respective property (which may for example be position or orientation).

Thus, the two considered parametrizations present a trade-off between runtime efficiency and representational power.

For time-constant outputs, the model may directly output mean and variance parameters for the output distribution. For those outputs that are generated by time-continuous polynomial functions, variance estimation may be achieved by instead placing a normal distribution over the polynomial coefficients output by the model. Since a polynomial as a function of its coefficients is a linear combination, the evaluation of a polynomial with normally distributed coefficients in turn results in another normal distribution, making generation of the actual output distributions trivial. The output mean may be represented and treated exactly as the non-distribution output, as two separate polynomial functions of a selectable degree (one polynomial function for the first component, and one polynomial function for the second component). In the isotropic case, it may be assumed that the variance is shared between the two polynomials (in other words: two polynomial functions) and is different but uncorrelated between different coefficients. Using degree 2 as an example, each of the position of a pre-determined target and the orientation of the pre-determined target may be represented as 2D vectors. $x$ and $y$ may denote thee two dimensions of these 2D vectors. $x$ may be represented by polynomial $x(t) = c_{x,0} + c_{x,1}t + c_{x,2}t^2$, $y$ may be represented by polynomial $y(t) = c_{y,0} + c_{y,1}t + c_{y,2}t^2$, and the variance output may be calculated as $\sigma(t) = \sigma_0 + \sigma_1 t^2 + \sigma_2 t^4$.). The position and the orientation may each have their own independent $x(t)$, $y(t)$, and $\sigma(t)$ (or $\Sigma_o$) with separate coefficients (or parameters). The coefficients are different regression outputs, but both calculated using the same technique as described herein (so the vector $o$ may refer to either one, i.e. to the vector representing the position or to the vector representing the orientation).

$x$ and $y$ may be assumed to share one variance, so that for each $i$ ($i = 0$, $i = 1$, or $i = 2$) each $c_{x,i} / c_{y,i}$ pair gets its own variance $\sigma_i$, and that different pairs (for example $c_{x,i} / c_{y,j}$ pairs or $c_{x,i} / c_{x,j}$ pairs, with $i \neq j$) are modelled as uncorrelated to one another other (i.e. as having a correlation coefficient of zero). The $c_{x,i}$, $c_{y,i}$, and $\sigma_i$ may be per-target network outputs (i.e. one set of parameters $c_{x,i}$, $c_{y,i}$, and $\sigma_i$ is provided by the network as an output for each target and for each of position or orientation). The output variance may then be calculated from the coefficient variance essentially via one additional polynomial function in which the time exponents are doubled. In the full covariance matrix case, the variance may be modelled as a single large matrix encompassing both polynomials, allowing for correlation between coefficients both from different polynomials and from the same polynomial. The output covariance matrix $\Sigma_o$ may be calculated from the coefficient covariance matrix $\Sigma_c$ as $\Sigma_o = S\Sigma_c S^T$ using a matrix $S$ containing the powers of time in an appropriate arrangement. $S$ may be structured such that multiplying it with a vector containing polynomial coefficients implements the corresponding polynomial. Using degree 2 as an example and arbitrarily defining the coefficient vector to have the layout $c = [c_{x,0}, c_{x,1}, c_{x,2}, c_{y,0}, c_{y,1}, c_{y,2}]^T$, then the correct structure for $S$ would be

$$S = \begin{bmatrix} 1 & t & t^2 & 0 & 0 & 0 \\ 0 & 0 & 0 & 1 & t & t^2 \end{bmatrix}$$

so that

$$Sc = \begin{bmatrix} x(t) \\ y(t) \end{bmatrix} = o$$

Then, if $\Sigma_c$ is the covariance matrix for vector $c$, $\Sigma_o = S\Sigma_c S^T$ is the covariance matrix for vector $o$.

According to various embodiments, the network layers for the variance may be designed such that their output is always within the range of valid values. In the isotropic case, this may mean ensuring that the output variance is strictly positive, which may be achieved through a softplus activation function (which has been found to be more numerically stable than the exponential activation function which may also be used for this purpose). In the covariance matrix case, this may require output matrices to be positive definite, which may be achieved using an inverse LDL (lower-diagonal-lower) decomposition. The LDL decomposition may represent a covariance matrix $\Sigma$ using the formula $\Sigma = LDL^T$, where $L$ is a lower-unitriangular matrix and $D$ is a diagonal matrix with strictly positive diagonal entries. A covariance matrix of size $N \times N$ may therefore be generated using two network layers, one with linear activation and $N(N - 1)/2$ output values which are arranged into matrix $L$, another with softplus activation and $N$ values which are arranged into matrix $D$.

During network optimization, the network may learn to output normal distributions that maximize the likelihood of the training examples. This may be achieved via standard gradient descent method by replacing a regular smooth L1 regression loss with a negative log-likelihood loss derived from the probability density function of a bivariate normal distribution.

It has been found that the gradients of the negative log-likelihood loss seem to have a larger scale than the smooth L1 loss, which may lead to the regression objectives overpowering the classification objective, preventing convergence and hurting performance. This may be avoided by splitting the training into two phases. First, a pretraining phase (in other words: non-variance pretraining; in other words: a first training; in other words: a first training phase) may be provided, in which the classification and regression means are optimized first (ignoring the regression variance outputs entirely and using regular smooth L1 losses). Secondly, a variance estimation phase (in other words: a second training; in other words: a second training phase) may be provided, in which training is continued (for example by keeping the results (for example weights) obtained in the first training phase), now also optimizing the variance outputs by using the negative log-likelihood loss in place of the smooth L1 loss.

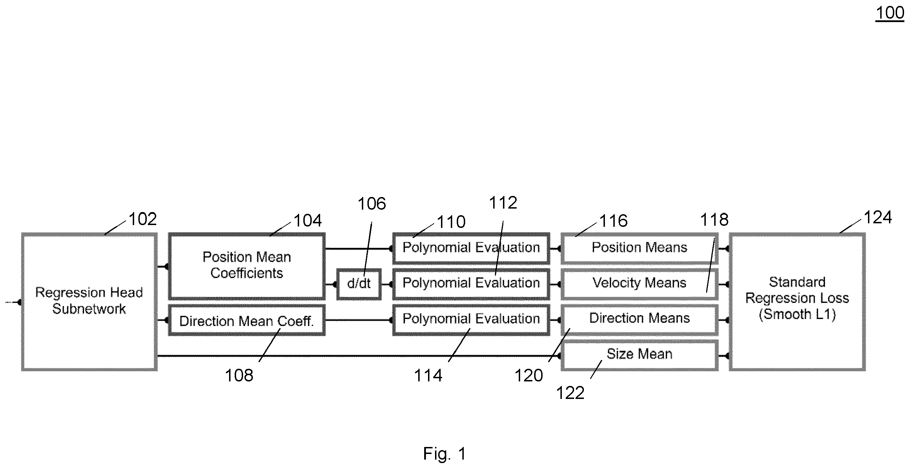

Fig. 1 shows an illustration 100 of a setup for the first training phase according to various embodiments. A regression head subnetwork 102 may output position mean coefficients 104, direction mean coefficients 108, and a size mean 122. Position means 116 may be determined using a polynomial evaluation 110 of the position mean coefficients 104. Velocity means 118 may be determined using a polynomial evaluation 112 of a temporal derivative (or derivation; d/dt) 106 of the position mean coefficients 104. Direction means 120 may be determined using a polynomial evaluation 114 of the direction mean coefficients 108. The position means 116, velocity means 118, direction means 120, and size mean 122 may be provided to the standard regression loss evaluation block 124. The output of the standard regression loss evaluation block 124 may be used as a loss function (in other words: optimization criterion) for training the network in the first training phase.

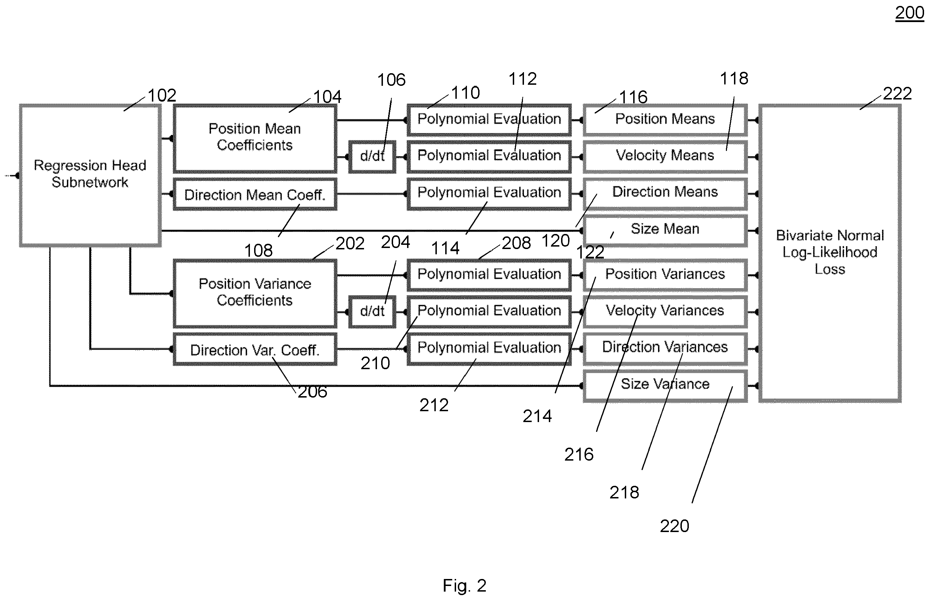

Fig. 2 shows an illustration 200 of a setup for the second training phase according to various embodiments. Various items shown in Fig. 2 may be similar or identical to items shown in Fig. 1, so that the same reference signs may be used and duplicate description may be omitted. The regression head subnetwork 102 may further output position variance coefficients 202, direction variance coefficients 206, and a size variance 220. Position variances 214 may be determined using a polynomial evaluation 208 of the position variance coefficients 202. Velocity variances 216 may be determined using a polynomial evaluation 210 of a temporal derivative (or derivation; d/dt) 204 of the position variance coefficients 202. Direction variances 218 may be determined using a polynomial evaluation 212 of the direction variance coefficients 206. The position means 116, velocity means 118, direction means 120, size mean 122, position variances 214, velocity variances 216, direction variances 218, and size variance 220 may be provided to the bivariate normal log-likelihood block 222. The output of the bivariate normal log-likelihood block 222 may be used as a loss function (in other words: optimization criterion) for training the network in the second training phase.

According to various embodiments, methods for the association, aggregation, and scoring employed in DeepTracker's postprocessing step may be provided, which may make constructive use of the estimated variance to increase performance.

The association of new detections to existing tracks may be improved by using a variance-aware association score. In place of the intersection-over-union between the bounding boxes in the detection tracklet and the existing object track, the volume underneath the product of the probability density functions of the output distributions may be used. This volume may have three properties that make it suitable as an association score: 1) The score may be higher the better the means of the distributions match. 2) The higher the variance, the less sharply does the association score descent with increasing distance of the means (so as uncertainty increases, the model becomes more willing to associate worse matches). 3) The lower the variance, the higher the score when the means are close (so the system may prefer to associate a good match with high certainty over an equally good match with lower certainty).

For aggregating (or aggregation of) the information from multiple detections concerning the same time-step, instead of averaging object data, the data's normal distributions may be multiplied (which may result in another normal distribution). This may have at least two favorable properties: 1) Data points with higher certainty may be given greater influence over the end result. 2) The uncertainty of the end result may be reduced compared to (and proportional to) the uncertainties of the aggregated points. Illustratively, this technique may be related to both inverse-variance weighting and the update step of a Kalman filter.

For scoring, there may be a connection between the variance of an object and the chance it is a false positive. This connection may be strengthened by the aggregation scheme as described herein, because object tracks that get associated with fewer new detections may also have fewer points to aggregate and thus higher variance. This may be especially true for new tracks and for tracks where tracking has recently been lost. The estimated variance may therefore be used to refine the confidence score produced by the classification branch. According to various embodiments, for this rescoring, primarily the position variance may be considered, as it is the most distinctive in terms of object identity. According to various embodiments, the standard deviation of object position relative to object size may be used:

$$s = \left(s_x + s_y\right)/2,$$

$$\sigma_p = \sqrt{tr\left(\Sigma_{\mathbf{p}}\right)/2},$$

$$\sigma'_p = \sigma_p \,/\, s,$$

where $(s_x, s_y)$ may be the mean of the two-dimensional bounding box size and $\Sigma_p$ may be the 2 × 2 position covariance matrix. If $c$ is the confidence score, the updated score $c'$ may be calculated as

$$c' = c^{\beta \cdot \sigma'_p{}^{\alpha}},$$

where $\alpha$ and $\beta$ may be tunable parameters. This scheme may have at least three desirable properties for rescoring: 1) If the original score is already perfectly confident or unconfident ($c \in \{0, 1\}$), the variance may have no influence on the score. 2) For all other scores ($c \in (0, 1)$), the score may go towards zero as the variance increases and may go towards one as the variance approaches zero. 3) The speed at which these changes occur may be proportional to the original score.

According to various embodiments, the network may estimate variances around its regression outputs that correlate well with the error it makes, demonstrating it is successfully quantizing its own uncertainty. Furthermore, the postprocessing methods described herein may afford an increase in performance, especially for pedestrians.

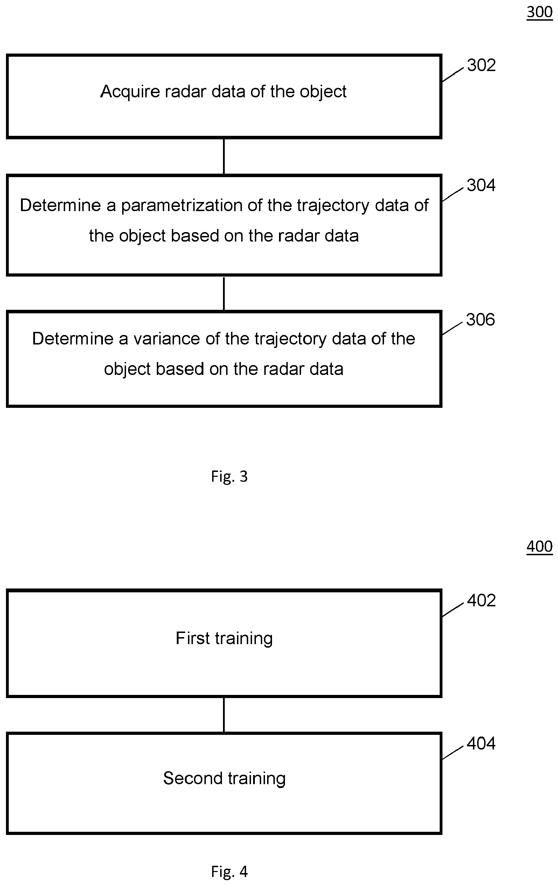

Fig. 3 shows a flow diagram 300 illustrating a method for predicting trajectory data of an object according to various embodiments. At 302, radar data of the object may be acquired. At 304, a parametrization of the trajectory data of the object may be determined based on the radar data. The trajectory data of the object may include or may be a position of the object and a direction of the object. The parametrization may include a plurality of parameters. The parametrization may include or may be a polynomial of a pre-determined degree, wherein the parameters (of the parameterization) may include or may be a plurality of coefficients related to elements of a basis of the polynomial space of polynomials of the pre-determined degree. At 306, a variance of the trajectory data of the object may be determined based on the radar data.

Fig. 4 shows a flow diagram 400 illustrating a method for training a machine learning method for predicting trajectory data of an object according to various embodiments. At 402, a first training may be provided, wherein parameters for the trajectory data are determined. At 404, a second training may be provided, wherein parameters for the trajectory data and parameters for the variance of the trajectory data are determined.

Each of the steps 302, 304, 306, 402, 404 and the further steps described above may be performed by computer hardware components.

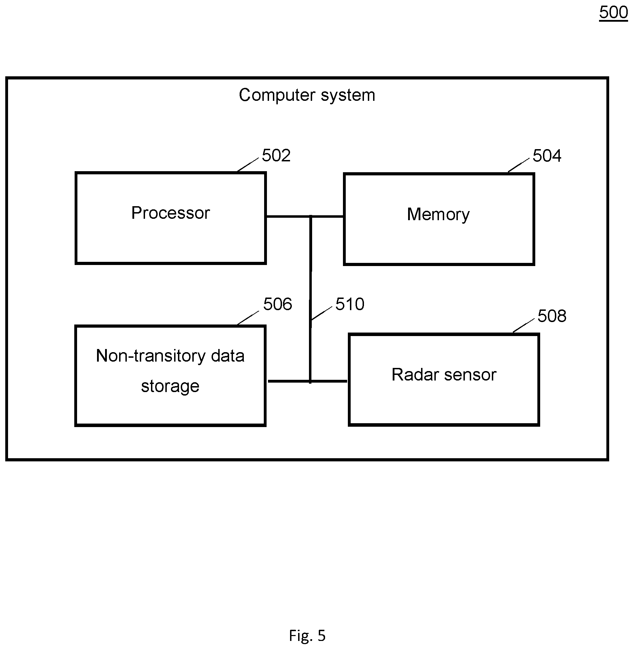

Fig. 5 shows a computer system 500 with a plurality of computer hardware components configured to carry out steps of a computer implemented method for predicting trajectory data of an object according to various embodiments or steps of a computer implemented method for predicting trajectory data of an object according to various embodiments according to various embodiments. The computer system 500 may include a processor 502, a memory 504, and a non-transitory data storage 506. A radar sensor 508 may be provided as part of the computer system 500 (like illustrated in Fig. 5), or may be provided external to the computer system 500.

The processor 502 may carry out instructions provided in the memory 504. The non-transitory data storage 506 may store a computer program, including the instructions that may be transferred to the memory 504 and then executed by the processor 502. The radar sensor 508 may be used for acquiring radar data of an object.

The processor 502, the memory 504, and the non-transitory data storage 506 may be coupled with each other, e.g. via an electrical connection 510, such as e.g. a cable or a computer bus or via any other suitable electrical connection to exchange electrical signals. The radar sensor 508 may be coupled to the computer system 500, for example via an external interface, or may be provided as parts of the computer system (in other words: internal to the computer system, for example coupled via the electrical connection 510).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 500.

It will be understood that although various exemplary embodiments herein have been described in relation to DeepTracker, the various methods and systems as described herein may be applied to any other method or system (other than DeepTracker).

Reference numeral list

| | |
|---|---|
| 100 | illustration of a setup for the first training phase according to various embodiments |
| 102 | regression head subnetwork |
| 104 | position mean coefficients |
| 106 | temporal derivative |
| 108 | direction mean coefficients |
| 110 | polynomial evaluation |
| 112 | polynomial evaluation |
| 114 | polynomial evaluation |
| 116 | position means |
| 118 | velocity means |
| 120 | direction means |
| 122 | size mean |
| 124 | standard regression loss evaluation block |
| | |
| 200 | illustration of a setup for the second training phase according to various embodiments |
| 202 | position variance coefficients |
| 204 | temporal derivative |
| 206 | direction variance coefficients |
| 208 | polynomial evaluation |
| 210 | polynomial evaluation |
| 212 | polynomial evaluation |
| 214 | position variances |
| 216 | velocity variances |
| 218 | direction variances |
| 220 | size variance |
| 222 | bivariate normal log-likelihood block |
| | |
| 300 | flow diagram illustrating a method for predicting trajectory data of an object according to various embodiments |
| 302 | step of acquiring radar data of the object |
| 304 | step of determining a parametrization of the trajectory data of the object based on the radar data |
| 306 | step of determining a variance of the trajectory data of the object based on the radar data |
| | |
| 400 | flow diagram illustrating a method for training a machine learning method for predicting trajectory data of an object according to various embodiments |
| 402 | first training |

404    second training

500    computer system according to various embodiments
502    processor
504    memory
506    non-transitory data storage
508    radar sensor
510    connection

**Claims**

1. Computer implemented method for predicting trajectory data of an object, the method comprising the following steps carried out by computer hardware components:

   - acquiring (302) radar data of the object;
   - determining (304) a parametrization of the trajectory data of the object based on the radar data; wherein the trajectory data of the object comprises a position of the object and a direction of the object, wherein the parametrization comprises a plurality of parameters, and wherein the parametrization comprises a polynomial of a pre-determined degree, wherein the parameters comprise a plurality of coefficients related to elements of a basis of the polynomial space of polynomials of the pre-determined degree; and
   - determining (306) a variance of the trajectory data of the object based on the radar data.

2. The computer implemented method of claim 1, wherein determining a variance of the trajectory data of the object comprises:
   determining (306) a parametrization of the variance of the trajectory data of the object based on the radar data; wherein the parametrization comprises a plurality of further parameters, wherein the parametrization comprises a further polynomial of a pre-determined further degree, wherein the further parameters comprise a plurality of further coefficients related to elements of the basis of the polynomial space of polynomials of the pre-determined further degree.

3. The computer implemented method of at least one of claims 1 to 2,
   wherein the variance of the trajectory data of the object comprises a multivariate normal distribution over the parameters.

4. The computer implemented method of claim 3,
   wherein determining the variance of the trajectory data comprises determining a positive definite matrix.

5. The computer implemented method of at least one of claims 1 to 4, further comprising the following steps carried out by the computer hardware components:

   - determining first intermediate data based on the radar data based on a residual backbone using a recurrent component;
   - determining second intermediate data based on the first intermediate data using a feature pyramid, wherein the feature pyramid preferably comprises transposed strided convolutions; and

   wherein the parametrization of the trajectory data of the object is determined based on the second intermediate data;
   wherein the residual backbone using the recurrent component preferably comprises a residual backbone preceded by a recurrent layer stack; and/ or
   wherein the residual backbone using the recurrent component preferably comprises a recurrent residual backbone comprising a plurality of recurrent layers; and/or
   wherein the plurality of recurrent layers preferably comprise a convolutional long short-term memory followed by a convolution followed by a normalization: and/or
   wherein the plurality of recurrent layers preferably comprise a convolution followed by a normalization followed by a rectified linear unit followed by a convolutional long short-term memory followed by a convolution followed by a normalisation; and/or
   wherein the recurrent component preferably comprises a recurrent loop which is carried out once per time frame; and/ or
   wherein the recurrent component preferably keeps hidden states between time frames.

6. The computer implemented method of at least one of claims 1 to 5, wherein the radar data of the object comprises at least one of radar data cubes or radar point data.

7. The computer implemented method of at least one of claims 1 to 68, wherein the coefficients represent a respective mean value.

8. The computer implemented method of at least one of claims 1 to 7, further comprising the following step carried out by the computer hardware components:
   postprocessing of the trajectory data based on the variance of the trajectory data.

9. The computer implemented method of claim 8, wherein the postprocessing comprises at least one of association, aggregation, or scoring.

10. The computer implemented method of at least one of claims 1 to 9, wherein the method is trained using a training method comprising a first training and a second training,

wherein in the first training, parameters for the trajectory data are determined; and

wherein in the second training, parameters for the trajectory data and parameters for the variance of the trajectory data are determined.

11. Computer implemented method for training a machine learning method for predicting trajectory data of an object, the method comprising the following steps carried out by computer hardware components:

a first training (402), wherein parameters for the trajectory data are determined; and

a second training (404), wherein parameters for the trajectory data and parameters for the variance of the trajectory data are determined.

12. The computer implemented method of claim 11,

wherein in the first step, a smooth L1 function is used as a loss function; and/or

wherein in the second step, a bivariate normal log-likelihood function is used as a loss function.

13. Computer system (500), the computer system (500) comprising a plurality of computer hardware components configured to carry out steps of the computer implemented method of at least one of claims 1 to 12.

14. Vehicle comprising a least a subset of the computer system (500) of claim 13.

15. Non-transitory computer readable medium comprising instructions for carrying out the computer implemented method of at least one of claims 1 to 12.

Fig. 1

Fig. 2

300

| Acquire radar data of the object | 302 |

| Determine a parametrization of the trajectory data of the object based on the radar data | 304 |

| Determine a variance of the trajectory data of the object based on the radar data | 306 |

Fig. 3

400

| First training | 402 |

| Second training | 404 |

Fig. 4

500

```
┌─────────────────────────────────────────────────────────────┐
│                     Computer system                          │
│                                                              │
│           502                            504                 │
│   ┌──────────────────┐          ┌──────────────────┐        │
│   │                  │          │                  │        │
│   │    Processor     │──────────│     Memory       │        │
│   │                  │     │    │                  │        │
│   └──────────────────┘     │    └──────────────────┘        │
│                            │                                 │
│           506      510     │          508                    │
│   ┌──────────────────┐     │    ┌──────────────────┐        │
│   │ Non-transitory   │     │    │                  │        │
│   │      data        │─────┴────│   Radar sensor   │        │
│   │    storage       │          │                  │        │
│   └──────────────────┘          └──────────────────┘        │
│                                                              │
└─────────────────────────────────────────────────────────────┘
```

Fig. 5

13

Europäisches
Patentamt

European
Patent Office

Office européen
des brevets

# EUROPEAN SEARCH REPORT

Application Number

EP 21 18 8550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/192347 A1 (ZHAO KUN [DE] ET AL) 24 June 2021 (2021-06-24)<br><br>* paragraphs [0042] – [0046], [0027], [0008], [0033], [0004] – [0005], [0008], [0033], [0035] – [0036], [0017]; figures 1,2 *<br>───── | 1-4, 6-10, 13-15 | INV.<br>G01S13/72<br>G01S13/931<br>G06V20/58 |
| A | WO 2018/045055 A1 (AUTOLIV ASP INC [US]) 8 March 2018 (2018-03-08)<br>* paragraphs [0011] – [0013], [0029] – [0032]; figure 8 *<br>───── | 1-10, 13-15 | |
| | | | **TECHNICAL FIELDS SEARCHED (IPC)**<br><br>G01S<br>G06K<br>G06V |

The present search report has been drawn up for all claims

| Place of search | Date of completion of the search | Examiner |
|---|---|---|
| Munich | 12 January 2022 | Metz, Carsten |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
.......................................................................
& : member of the same patent family, corresponding
  document

EPO FORM 1503 03.82 (P04C01)

Europäisches
Patentamt

European
Patent Office

Office européen
des brevets

Application Number

EP 21 18 8550

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10, 13-15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
## SHEET B

The Search Division considers that the present European patent application does not comply with the requirements of unity of invention and relates to several inventions or groups of inventions, namely:

```
1. claims: 1-10, 13-15

     A specific machine learning method for predicting trajectory
     data of an object.
     Solved technical problem underlying the claimed invention:
     to anticipate, which path the object will take in the
     future.
                         ---


2. claims: 11, 12

     A computer implemented method for training a machine
     learning method for predicting trajectory data of an object.
     Solved technical problem underlying the claimed invention:
     training a generic a machine learning method for predicting
     trajectory data of an object.
                         ---
```

EP 4 124 887 A1

## ANNEX TO THE EUROPEAN SEARCH REPORT
## ON EUROPEAN PATENT APPLICATION NO.

EP 21 18 8550

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2022

| Patent document cited in search report | | Publication date | Patent family member(s) | | Publication date |
|---|---|---|---|---|---|
| US 2021192347 | A1 | 24-06-2021 | CN 113010959 A | | 22-06-2021 |
| | | | EP 3839805 A1 | | 23-06-2021 |
| | | | US 2021192347 A1 | | 24-06-2021 |
| WO 2018045055 | A1 | 08-03-2018 | JP 6714148 B2 | | 24-06-2020 |
| | | | JP 2019532265 A | | 07-11-2019 |
| | | | WO 2018045055 A1 | | 08-03-2018 |

EPO FORM P0459

For more details about this annex : see Official Journal of the European Patent Office, No. 12/82

**EP 4 124 887 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20187694

- EP 21186073